# EUROPEAN PATENT APPLICATION

(11) **EP 2 586 849 A2**
(43) Date of publication of application: **01.05.2013**
(21) Application number: 12190336.3
(22) Date of filing: 29.10.2012
(51) Int. Cl.: C09K 21/04, B27K 3/16

(54) **Ammonium phosphate aqueous systems suitable for use as flame retardant additives**

(30) Priority: 28.10.2011 GB 201118633
(71) Applicant: FR-Master bvba, 3600 Genk (BE)
(72) Inventor: Hammink, Maarten, 9250 Waasmunster (BE)
(74) Representative: Bird Goën & Co

(57) **Abstract**

This invention provides an aqueous system comprising, per 100 parts by weight, from 35% to 80% water and from 20% to 65% mono-ammonium phosphate (MAP), said MAP containing from 40% to 57% by weight phosphorus pentoxide and being present in the form of both optically detectable solid particles and non-optically detectable solid particles, wherein:
(a) the fraction of optically detectable solid particles having a particle size below 1 µm with respect to all optically detectable solid particles is at least 8%,
(b) no optically detectable solid particles having a particle size above 70 µm are present, and
(c) the average particle size corresponding to 50% of optically detectable solid particles is not above 5 µm.

This aqueous system is suitable for use as a flame retardant additive.

## Description

### Field of the Invention

The present invention relates to mono-ammonium phosphate aqueous systems and the production thereof. More specifically the present invention relates to mono-ammonium phosphate aqueous systems having flame retardant properties and that can be safely manufactured via an easy production method using equipment standard in the art. The present invention relates to mono-ammonium phosphate aqueous systems suitable for use as flame retardant additives for incorporation into materials needing a reduction in flammability such as wood panels or panels from engineered wood-based composite materials such as particle board (also named chipboard), medium-density fibreboard (hereinafter abridged as MDF). The present invention also relates to methods for producing materials with reduced flammability by applying, impregnating, injecting or coating a mono-ammonium phosphate aqueous system as described herein.

### Background of the Invention

Apart from being widely produced in granular form for direct application as a fertilizer, mono-ammonium phosphate (most common grade contains 11% nitrogen and 52% phosphorus pentoxide) is also a component of some dry powder fire extinguishers. It is mainly stored and transported as a solid at ambient temperature.

Due to these flame retardant properties, a few attempts have been made by manufacturers of wood panels or panels from engineered wood-based composite materials such as particle board (chipboard) or MDF to incorporate mono-ammonium phosphate (hereinafter abridged as MAP) in the form of an aqueous dispersion of MAP which has been dried to reduce the moisture content to 0.05 to 0.3 % by weight and then mechanically ground via a trapezium mill and finally dispersed using a traditional dispersing method using propeller mixers or shaft dispersion mixers with or without anchor scraper. This usually results into dispersed MAP particles with an average particle size of about 25 µm and a top cut size of at least 120 µm. Although no better MAP dispersion currently exists, such aqueous dispersions have been found insufficient in terms of stability and in terms of providing reduced flammability and other quality requirements for the home furniture industry where wood panels or panels from particle board (chipboard) or MDF are used. It is known to the skilled person that a MAP-containing flame retardant tends to decrease certain mechanical properties of these panels. Therefore there is a need in the art for a form of MAP dispersion that decreases this tendency.

British Patent No. 785,977 discloses a flame resistant film-forming composition comprising (a) finely divided particles of an amino-aldehyde resin, an oil seed meal or casein, (b) finely divided ammonium phosphate acting as flame retardant, (c) a film-forming amino-aldehyde resin in combination with an alkyd resin, and (d) an organic liquid being a solvent for (c) but not for (b). This composition is non-aqueous.

British Patent No. 864,099 discloses a fire-retardant and protective coating composition comprising (a) an alkali catalyzed urea-dicyandiamide-phenol-aldehyde resin, (b) starch and (c) at least 25% by weight (based on the total weight of composition) of an inorganic ammonium salt capable of liberating ammonia, e.g. mono ammonium phosphate. The production method at temperatures of from 30 to 90 °C involves removal of water, thus making this composition non-aqueous.

European patent application No. 025.642 discloses a water-soluble crystalline material comminuted in a saturated aqueous solution in the presence of a dissolved amphiphilic crystal-growth inhibitor, wherein said material is in admixture with a deflocculant, whereby flocculation is inhibited whenever the material is suspended in water. Materials exemplified are nitrates and di-ammonium phosphate. The disclosed amount of water is from 10 to 40% by weight.

French patent application No. 2.531.347 discloses the preparation of non-sedimenting aqueous dispersions of solid particles by incorporating a mixture of starch and urea wherein the urea/starch weight ratio is from 1 to 50. Solid particles may be mono ammonium phosphate in combination with ammonium hydroxide and potassium chloride, thus making an NPK fertilizing system.

U.S. Patent No. 4,632,813 discloses a process for producing water soluble mono-ammonium phosphate from ammonia and phosphoric acid.

International patent application WO 91/00326 discloses flame retarding water-soluble mixtures comprising (a) mono ammonium phosphate, (b) ammonium sulphate, (c) sodium hydrogen carbonate, (d) ethylene diamine tetra-acetic acid in specified proportions. The mono ammonium phosphate disclosed weight proportions are 8.7% and 15.4%.

European patent application No. 1.607.464 discloses a dry powdered fire retardant composition for mixing with water on-site, comprising a fire retardant salt (e.g. mono ammonium phosphate) and at least 5% by weight dry powdered agar-agar. The amount of water for admixing with the fire retardant composition is not specified.

French patent application No. 2.946.053 discloses a fire retardant composition with a pH from 6.6 to 6.9, comprising, per 100 g mono ammonium phosphate, 12 g ammonium chloride, 22 g urea, and from 170 to 270 g water. The weight proportion of mono ammonium phosphate in the aqueous system is thus from 25% to 33%.

Thus there is a need in the art for providing mono-ammonium phosphate aqueous systems meeting the requirements of the home furniture industry in terms of stability for incorporation into the manufacturing process, and in terms of providing reduced flammability and other safety requirements for the wood panels or panels from particle board (chipboard) or MDF used in this industry. There is also a need in the art for providing improved mono-ammonium phosphate aqueous systems wherein the specific surface area of particles incorporated into the panels is significantly higher than those used in the current state-of-the-art technology. There is also a need in the art for providing improved mono-ammonium phosphate aqueous systems wherein the particle size distribution can be adequately and readily measured in particular for quality production control. There is also a need in the art for providing improved mono-ammonium phosphate aqueous systems which, although they differ significantly from the existing ones, can be incorporated into a wood panel production line or a production line of panels from engineered wood-based composite materials without significant changes to the design of this production line. There is also a need in the art for providing improved mono-ammonium phosphate aqueous systems which, due to their intrinsic physical and flammability properties, can be used for manufacturing any type of product with reduced flammability, i.e. not only wood panels or panels from engineered wood-based composite materials (e.g. MDF panels, chipboard panels and oriented strand board panels) for the home furniture industry and the structural architecture industry.

### Summary of the Invention

The current needs in the art are met, in a first aspect of the present invention, by a MAP-containing aqueous system (i.e. composition) having no coarse particles above 70 µm, wherein the average particle size does not exceed 5 µm, and having a proportion of very fine particles (below 1 µm) of at least 8%. More particularly this aqueous system (composition) comprises, per 100 parts by weight, from 35% to 80% water and from 20% to 65% mono-ammonium phosphate (MAP), said MAP containing from 40% to 57% by weight phosphorus pentoxide and being present in the aqueous system in the form of both optically detectable solid particles and non-optically detectable solid particles, **characterized in that**:
(a) the fraction of optically detectable solid particles having a particle size below 1 µm with respect to all optically detectable solid particles is at least 8%,
(b) no optically detectable solid particles having a particle size above 70 µm are present, and
(c) the average particle size corresponding to 50% of optically detectable solid particles is not above 5 µm.

A second aspect of the present invention relates to a method for producing the MAP-containing aqueous system (composition) as defined hereinabove, or any specific embodiment thereof, the method comprising the steps of:
a. providing a mixing vessel equipped with internal agitating means and optionally with internal wall scraping means, said mixing vessel (i) having an internal high speed rotor/stator mixer and/or being externally connected to a high speed inline rotor/stator mixer,
b. providing to said mixing vessel (1) water, (2) a defoamer, and (3) mono-ammonium phosphate (MAP) containing from 40% to 57% by weight phosphorus pentoxide and being in the form of granules or particles with an average diameter ranging from 50 µm to 5 mm, in such proportions that the resulting water/MAP blend contains, per 100 parts by weight, 20% to 65% MAP and 35% to 80% water;
c. mixing the water/MAP blend (1, 3) in the presence of the defoamer (2) until the MAP granules or particles provided in step (b) are disintegrated into both optically detectable solid particles and non-optically detectable solid particles as defined in the characterizing portion hereinabove; and
d. adding a thickener to set the viscosity of the aqueous MAP-containing system between 100 cps and 200 cps.

A third aspect of the present invention relates to the use of a MAP-containing aqueous system (composition) as defined in the first aspect hereinabove, or any specific embodiment thereof, as a flame-retardant additive, especially for manufacturing products with reduced flammability or flame-retardant products by incorporating said additive therein.

A fourth aspect of the present invention relates to a method for producing a flame-retardant product, comprising the steps of:
a. providing an aqueous MAP-containing system (i.e. composition) as defined hereinabove, or any specific embodiment thereof,
b. applying, impregnating, injecting or coating a product with the aqueous MAP-containing system of step (a), and
c. drying the impregnated, injected or coated product of step (b) until at least 80% of water from the aqueous MAP-containing system has been removed.

### Brief description of the drawings

Figure 1 shows the particle size distribution and cumulative distribution of optically detectable particles of an aqueous MAP-containing system (i.e. composition) according to one embodiment of this invention.
Figure 2 shows the particle size distribution and cumulative distribution of optically detectable particles of an aqueous MAP-containing system of the prior art.

### Detailed description of the Invention

We herein describe various embodiments or preferred embodiments of each aspect of the present invention. Unless explicitly specified below, narrower ranges of certain features within the above described broad expression of each aspect of the present invention are not intended to be preferred.

An embodiment of the first aspect of the present invention relates to an aqueous system as defined herein wherein the weight proportions of water, and mono-ammonium phosphate respectively, are selected within narrower ranges. For instance the weight proportion of water may be at least 40%, or at least 45%, or at most 75%, .or at most 70%, or at most 65%, or at most 60%, or at most 55%. Accordingly the weight proportion of mono-ammonium phosphate (MAP) may be at least or above 25%, or at least 30%, or at least 35%, or at least 40%, or at least 45%, or at most 60%, or at most 55%. The proper selection, or the optimization, of the respective weight proportions of water and mono-ammonium phosphate (MAP) in the aqueous system (composition) of the present invention may be effected by the skilled person with a limited amount of experimentation, taking into account parameters such as but not limited to the weight content of phosphorus pentoxide in mono-ammonium phosphate (MAP), the target maximum size of coarse particles, and/or the target maximum average particle size, and/or the target minimum proportion of very fine particles (below 1 µm) in the dispersed aqueous system, or the target proportion of non-optically detectable solid particles with respect to the MAP solid particles in the dispersed aqueous system, as defined in any one of the specific embodiments described below.

The aqueous system (composition) of the present invention may well comprise other components than MAP and water. In particular it may comprise a thickener, preferably an inorganic thickener such as, but not limited to, a clay type thickener to adjust its viscosity to a predefined viscosity target. It may also comprise one or more other components with specific physical and/or chemical properties, in particular flame-retardant properties which are well known in the art. When the aqueous system (composition) of the present invention is intended for impregnating a cellulosic material, it may comprise one or more compatibilizers with said cellulosic material. Non-limiting examples of such further components include metal hydroxides, alkane-diamines, Arabic gum, ureas, glycols, boric acid, borates and the like. The respective amounts of such further components will be selected by the skilled person according to their intended utility, but will globally remain minor amounts with respect to the main components water and MAP. For instance the combined weight proportions of MAP and water in the aqueous system (composition) of the present invention may be at least 60%, or at least 80%, preferably at least 90%, more preferably at least 95%, most preferably at least 99%.

Another embodiment of the first aspect of the present invention relates to an aqueous system as defined hereinabove, wherein the weight content of phosphorus pentoxide in mono-ammonium phosphate (MAP) is selected within narrower ranges. For instance the weight content of phosphorus pentoxide in MAP may be at least 43%, or at least 46%, or at least 49%, .or at most 53%. The proper selection, or the optimization, of the weight content of phosphorus pentoxide in mono-ammonium phosphate (MAP) in the aqueous system of the present invention may be effected by the skilled person with a limited amount of experimentation, taking into account the commercial availability of MAP grades, and parameters such as but not limited to the respective weight proportions of water and mono-ammonium phosphate, the target maximum size of coarse (optically detectable) particles, and/or the target maximum average particle size of optically detectable particles, and/or the target minimum proportion of very fine yet optically detectable particles (below 1 µm) in the dispersed aqueous system, or the target proportion of non-optically detectable solid particles with respect to the MAP solid particles in the dispersed aqueous system.

Yet another embodiment of the first aspect of the present invention relates to an aqueous system as defined herein wherein the fraction of optically detectable solid particles having a particle size below 1 µm with respect to all optically detectable solid particles in the dispersed aqueous system is selected within narrower ranges. For instance the fraction of optically detectable solid particles having a particle size below 1 µm with respect to all optically detectable solid particles in the dispersed aqueous system of the present invention may be at least 10%, or at most 15%, or at most 12%.

Yet another embodiment of the first aspect of the present invention relates to an aqueous system as defined herein wherein the maximum size of coarse (optically detectable) particles present in the aqueous system is selected within narrower ranges. For instance the maximum size of coarse (optically detectable) particles in the aqueous system may be at most 65 µm, or at most 55 µm, or at most 45 µm.

. Yet another embodiment of the first aspect of the present invention relates to an aqueous system as defined herein wherein the maximum average particle size corresponding to 50% of optically detectable solid particles in the aqueous system is selected within narrower ranges. For instance the average particle size corresponding to 50% of optically detectable particles in the dispersed aqueous system may be at most 4 µm, or at most 3 µm, or at least 2 µm.

The target maximum size of coarse (optically detectable) particles, as well as the target maximum average particle size of optically detectable particles, and/or the target minimum proportion of very fine yet optically detectable particles (below 1 µm) in the dispersed aqueous system of the present invention may easily be achieved by the skilled person simply, i.e. with a limited amount of experimentation, by selecting the weight proportions of water and mono-ammonium phosphate, and/or the weight content of phosphorus pentoxide in mono-ammonium phosphate (MAP) within the broad ranges or the narrower ranges of the first aspect of the present invention described herein, and/or by varying one or more of the operating conditions of the method of production described below. The target maximum size of coarse (optically detectable) particles, as well as the target maximum average particle size of optically detectable particles, and/or the target minimum proportion of very fine yet optically detectable particles (below 1 µm) in the dispersed aqueous system of the present invention may be defined according to the intended use of the said aqueous system as described below, in particular within the scope of the third aspect of this invention, such as but not limited to the product to/into which the aqueous system should be applied, impregnated, injected or coated with an aim to impart flame retardant properties. This definition of the target physical characteristics of the dispersed MAP-containing aqueous system includes taking into account the composition, thickness, dryness and other properties of said product.

Within the scope of the above definitions, the distinction between optically detectable particles and non-optically detectable particles can be made by the skilled by reference to the current limits and precision of optical methods for determining the presence and size of particles present in an aqueous medium. The standard reference in this respect is currently laser diffraction particle size analysis. A laser diffraction particle size analyzer currently does not detect or quantifies with reasonable accurateness particles which are in solution, i.e. particles with a size below 0.1 µm. The quantification of the amount of non-optically detectable particles present in the dispersed aqueous medium of the present invention can thus be carried out by indirect methods. For instance a suitable determination method includes the steps of:
(i) optically measuring the average particle size corresponding to 50% of optically detectable solid particles of a MAP-containing aqueous system of the invention (e.g. produced as described below),
(ii) diluting with water in a recipient, using a dilution ratio X, the aqueous system of step (i) thereby reducing its viscosity, thus determining a total solid content of 50/X % in the diluted aqueous system,
(iii) leaving the diluted aqueous system of step (ii) settle until all of the solid particles are visually situated on the bottom of the recipient, thus leaving a clear colorless liquid on the top of the recipient,
(iv) taking a sample of said clear colorless liquid on the top of the recipient,
(v) measuring the solid content of the sample of step (iv) by means of a gravimetric infrared moisture analyzer, and
(vi) proportionating the solid content measured in step (v) to the total solid content of step (ii).

Within the above determination method, the higher the dilution ratio X, the higher the viscosity reduction of the aqueous system, therefore the lower the settling time of step (iii). Depending upon the time period allowed for global determination, the skilled person will readily select an appropriate dilution ratio X. It has thus been found that the above determination method can be carried out within a reasonable period of time (say not more than a few hours) by selecting a dilution ratio X from 5 to 20.

Laser diffraction particle size analysis is herein given as a non limiting example of an easy-to-use method suitable for performing step (i) of the above determination method.

Gravimetric infrared moisture analysis is herein given as a non limiting example of an easy-to-use method suitable for determining the presence and amount of particles with a size below 0.1 µm within an aqueous liquid solution. Such a method may be performed for instance by using a precision weighing balance from the company Sartorius (Germany).

Thus another embodiment of the first aspect of the present invention relates to an aqueous system as defined herein wherein the respective amounts and sizes of optically detectable particles and non-optically detectable particles are determined through a combination of laser diffraction particle size analysis and gravimetric infrared moisture analysis.

By using the above-described determination method, it has been determined that the MAP-containing aqueous system of the invention (e.g. produced as described below) usually contains more than 50% non-optically detectable particles. In an embodiment of the first aspect of the present invention, the non-optically detectable particles represent more than 60%, or more than 70%, or less than 95%, or less than 85% of the total MAP solid particles present in the MAP-containing aqueous system. Applying a correction factor derived from the proportion of non-optically detectable particles in the total MAP solid particles of the aqueous system of this invention, it is then possible to calculate that the average particle size of both optically detectable and non-optically detectable particles. This has been found to be usually below 1.0 µm. In an embodiment of the first aspect of the present invention, the average particle size of both optically detectable and non-optically detectable particles of the MAP-containing aqueous system of this invention is below 0.9 µm, or below 0.75 µm, or at least 0.5 µm.

In yet another embodiment of the first aspect of the present invention, optically detectable solid particles with a particle size above 1.0 µm represent less than 45% by weight of the MAP solid particles of the MAP-containing aqueous system.

In step (a) of the production method broadly defined in the second aspect of the present invention hereinabove, any agitating means may be used that is suitable for keeping in a homogeneous state the water/MAP blend provided in step (b). If the agitating means is of a rotating type, the rotation speed will be adapted to this goal according to standard practice well known to those skilled in the art. More specifically the rotation speed will be adapted to parameters such as but not limited to the average diameter of the MAP granules or particles, and the weight proportion of MAP in said blend, i.e. to the viscosity of the blend. Many types of suitable agitators are known in the art and commercially available.

An embodiment of the second aspect of the present invention relates to a method of production wherein the mixing vessel of step (a) is equipped with both internal agitating means and internal wall scraping means. Such an embodiment allows an easier achievement of the homogeneous state of the blend as described hereinbefore. Many types of suitable internal wall scraping means are known in the art and commercially available.

Another embodiment of the second aspect of the present invention relates to a method of production wherein the respective weight proportions of water and MAP granules or particles are selected within narrower ranges as defined hereinbefore.

Another embodiment of the second aspect of the present invention relates to a method of production wherein the phosphorous pentoxide content of the MAP granules or particles are selected within narrower ranges as defined hereinbefore.

Another embodiment of the second aspect of the present invention relates to a method of production wherein the average diameter of the MAP granules or particles are selected within narrower ranges. For instance one may provide in step (b) MAP granules with an average diameter of 1 mm to 5 mm, or MAP particles with an average diameter of at least 50 µm but less than 1 mm, or MAP particles with an average diameter of at least 100 µm but at most 500 µm.

Another embodiment of the second aspect of the present invention relates to a method of production wherein the moisture content of the MAP granules or particles provided in step (b) ranges from 1% to 5% by weight, for instance from 1.5% to 3.5% by weight. Thus MAP granules or particles from a wide range of various commercial sources may be used for performing the method without needing any de-moisturizing step. This is advantageous in general, although in some instances it may be useful to monitor the moisture content in MAP in order to control the total amount of water in the aqueous system.

Another embodiment of the second aspect of the present invention relates to a method of production being carried out at moderate temperatures without a need for a heating or cooling step. Such moderate temperatures may be at least 5 °C, or at least 10 °C, or at least 15 °C, or at most 40 °C, or at most 30 °C, or at most 25 °C. In practice method of production of the second aspect of the present invention is preferably carried out at room temperature.

Another embodiment of the second aspect of the present invention relates to a method of production wherein the mixing step (c) is carried out for a period of time sufficient for achieving the desired particle size requirements of the optically detectable solid particles, e.g. a period of time of at least 5 minutes, or at least 10 minutes, or at most 60 minutes, or at most 40 minutes. By coupling the outlet of the mixing vessel to a quality control system such as but not limited to a laser diffraction particle size analyzer, it is possible to determine whether the desired particle size requirements of the optically detectable solid particles have been achieved and, consequently, to determine whether the mixing step (c) can be stopped.

Another embodiment of the second aspect of the present invention relates to a method of production wherein the mixing step (c) is carried out for a period of time sufficient for obtaining the target weight proportion of the non-optically detectable solid particles as defined hereinabove. By coupling the outlet of the mixing vessel to a quality control system such as but not limited to a gravimetric infrared moisture analyzer, it is possible to determine whether the target weight proportion of the non-optically detectable solid particles have been achieved and, consequently, to determine whether the mixing step (c) can be stopped.

Another embodiment of the second aspect of the present invention relates to a method of production wherein the mixing step (c) is carried out for a period of time sufficient for obtaining the target average particle size of both optically detectable and non-optically detectable solid particles as defined hereinabove. By coupling the outlet of the mixing vessel to a quality control system such as but not limited to the combination of a laser diffraction particle size analyzer and a gravimetric infrared moisture analyzer, it is possible to determine whether the target average particle size of both optically detectable and non-optically detectable solid particles has been achieved and, consequently, to determine whether the mixing step (c) can be stopped.

Various types of defoamers (also frequently denoted as anti-foaming agents) can be provided in step (b) of the production method of the second aspect of the present invention. The proper selection of the defoamer (anti-foaming agent), and the proportion thereof, is mainly based on its compatibility with water and MAP and its capacity to provide the desirable defoaming effect within a specified period of time without negatively interfering with the desirability to keep a homogeneous state of the water/MAP blend in the mixing step (c), and therefore without adversely influencing the desired proportions of optically and non-optically detectable particles. Therefore it is preferred to use a non-silicon based defoamer. Non limiting examples thereof include for instance water-based defoamers (i.e. oils or waxes dispersed in an aqueous base), EO/PO defoamers (e.g. polyethyleneglycol and polypropyleneglycol copolymers), or alkyl polyacrylates.

Various types of thickeners can be added in step (d) of the production method of the second aspect of the present invention. The proper selection of a suitable thickener, and the proportion thereof, is mainly based on its capacity to afford the desired final viscosity of the MAP-containing aqueous system and/or improve the longterm stability of the system without negatively interfering with the characteristics (i.e. particle size and proportions) of both optically detectable solid particles and non-optically detectable solid particles produced in step (c). Although organic thickeners like cellulosic type thickeners may be considered for this purpose, it has been found that inorganic thickeners are usually preferred. A non limiting example of such inorganic thickeners is a clay type thickener which is readily commercially available such as for instance a phyllosilicate like sepiolite, a complex magnesium silicate which can be found in fibrous or fine particulate solid forms.

The proper selection of the amount of thickener is also based on its capacity to afford the target final viscosity of the MAP-containing aqueous system without negatively interfering with the characteristics of both optically detectable solid particles and non-optically detectable solid particles produced in step (c). It has been found for instance that an amount of thickener from 0.2% to 1% by weight, or from 0.3% to 0.8% by weight, of the water/MAP blend is usually sufficient for meeting this requirement, especially when an inorganic thickener such as a clay type thickener is added in step (d).

An embodiment of the third aspect of the present invention relates to a use as a flame retardant additive wherein the product with reduced flammability or flame-retardant product to be manufactured is a wood panel or a panel from engineered wood-based composite materials (e.g. MDF panels, chipboard panels and oriented strand board panels).

Another embodiment of the third aspect of the present invention relates to a use wherein the flame-retardant additive represents from 8% to 16% by weight, or from 10% to 15% by weight, of the flame-retardant product. This proportion depends, in a manner well known to those skilled in the art, upon the desirable or required flame-retardant properties. It has been surprisingly found for instance that a given weight proportion of the flame-retardant additive of this invention induces a reduction of mechanical properties of wood panels which is significantly lower than with the MAP-containing dispersions of the prior art. This is therefore advantageous to achieve a desirable compromise of mechanical and flame-retardant properties in a cellulosic material such as a wood panel.

An embodiment of the fourth aspect of the present invention relates to a method wherein the flame-retardant product to be produced is a flame-retardant wood panel, or a panel of an engineered wood-based composite material (e.g. a MDF panel, a chipboard panel or an oriented strand board panel). Such MDF panels may have a density in the range from 450 kg/m³ to 1200 kg/m³. Density is determined in the hot press where the fiber mat is pressed to the right thickness. Different types of MDF panels include high density board and flooring with a density above 800 kg/m³, standard density from 650 to 800 kg/m³, light boards with a density from 550 to 650 kg/m³, and ultralight boards with a density from 450 to 550 kg/m³. All such panel densities are compatible with the flame-retardant additive of the present invention.

Another embodiment of the fourth aspect of the present invention relates to a method wherein said flame-retardant product is a flame-retardant engineered wood product wherein wood fibers are combined with a resin binder and optionally a wax" and wherein step (b) is performed prior to, or simultaneously with, combining wood fibers with the resin binder. The resin binder usually is a urea - formaldehyde resin.

The present invention produces significant advantages over the traditional MAP-containing aqueous systems of the prior art. In particular, due to the significantly higher proportion of very fine particles, it provides:
- a better stability for incorporation into the manufacturing process of flame retardant products;
- reduced flammability characteristics and better satisfaction of quality requirements (mechanical properties) for wood panels or panels from particle board (chipboard) or MDF;
- significantly high specific surface area of particles; and
- particle size distribution that, despite the huge presence of very fine particles, can be adequately and readily measured and monitored in particular for quality production control.

The following examples are provided for illustration only.

### EXAMPLE 1

In a first step there is provided a manufacturing equipment comprising:
a. a mixing vessel of 5,000 L, equipped with a central high speed agitating device containing 2 dispersion blades (toothed discs),
b. side & bottom anchor type low speed scraper,
c. an externally connected: high speed inline rotor/stator mixer

In a second step there are provided to the mixing vessel, at the operating temperature of 15 °C, (1) 3,000L of water, then (2) 3 kg of a non silicon based defoamer (Anti-foam TMI from Gove, Gent, Belgium) homogenized with water by using the central agitating device material and then switching on scraper and inline rotor/stator mixer, then (3) adding over a time period of 15 minutes 3,000 kg of MAP granules (size 2 - 5 mm, 52% P2O5 (from Agro Khim Trade, Russia).

In a third step during another 30 minutes, the MAP granules were comminuted by means of the rotor/stator inline mixing system, still using the central agitator and the scraper to keep the water/MAP blend homogenous and avoiding phase separation.

In a fourth step 0.5% by weight (with respect to the water/MAP blend) of an inorganic clay type thickener (Pangel S9 from Tolsa, Madrid, Spain) was incorporated within 5 minutes under mixing to set the viscosity between 100 cps and 200 cps (Brookfield RVT, 100 rpm).

After the fourth step the result is a very homogenous, low viscous liquid, containing 50% solids wherein 100% pass through a 100 µm filter, and more than 99% pass through a 50 µm filter.

Laser diffraction particle size analysis was performed using a state of the art particle size analysis equipment. (HELOS/BR combined with a QUIXEL liquid dispersing system).

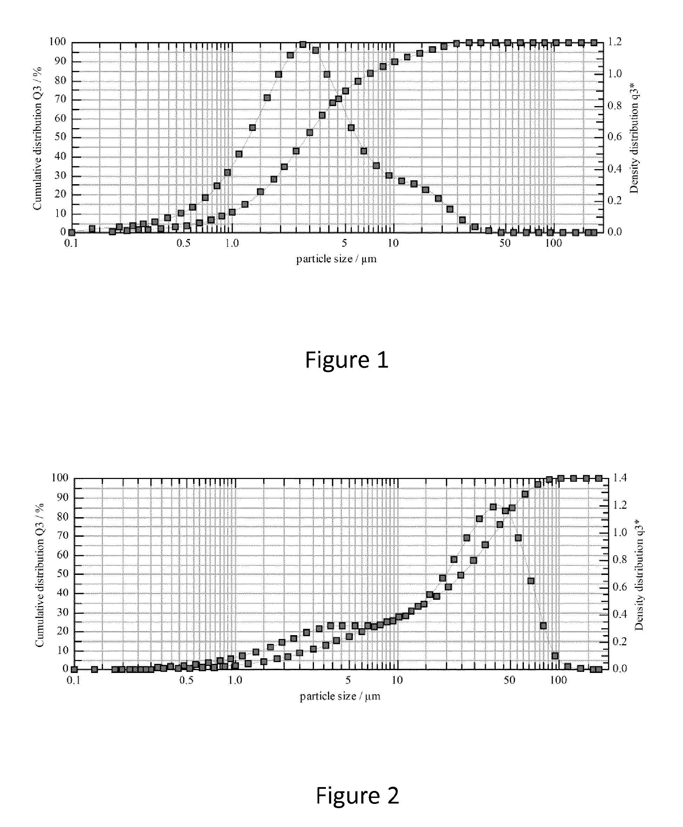

The resulting curve (particle size distribution and cumulative distribution) is shown in figure 1. The optically detectable particles are thus characterized by a D50 of 2.88 µm, a top cut of about 40 µm, with 10.7% particles with a size not above 1 µm.

Then the determination of dissolved (non optically detectable) particles was performed as follows:
i. Preparing a 10% water dilution of the D50, thus with a total solid content of 5% in a recipient,
ii. allowing all non dissolved particles to settle on the bottom of the recipient (due to the strongly reduced viscosity); after 24 hours, all solid particles were visually situated on the bottom, leaving a clear, colorless liquid on top of the recipient;
iii. taking a sample of 1 ml from the top of the recipient,
iv. measuring the solid content of said sample by means of an infrared moisture analyzer (Sartorius, Germany); the average result of 5 repeated tests was 3.85%, and
v. proportionating the solid content measured by infrared moisture analysis to the initial total solid content: 3.85/5.00 % means that 77% of particles were completely dissolved (thus non optically detectable).

Conclusions regarding particle size distribution and fractions result from calculations and results based on the total dry material of the liquid:

To the D50 fraction a correction factor (100% minus the non optically detectable part) is applied below:
- Fraction of non optically detectable particles constituting an aqueous MAP solution = 77%;
- Fraction of optically detectable particles having a size not above 1 µm : (100 - 77) x 10.7 = 2.5%;
- Fraction of particles having a size above 1 µm = (100 - 77) x (100 - 10.7) = 21.5%, and
- D50 (average size of all particles) = (2.88 µ / 100) x 25% = 0.72 µm.

### EXAMPLE 2 (comparative)

A MAP aqueous dispersion was prepared from dried and mechanically ground MAP granules using a traditional dispersing method using propeller mixers or shaft dispersion mixers with anchor scraper as described below.

Granules (size 0.5 - 5 mm, 56% P2O5 containing from 1 to 3% by weight moisture (from Office Chérifien des Phosphates, Morocco), are dried at a temperature range from 120 °- 140 °C at a speed of 5 tons/hour in an oven in a disk drier, resulting in a final moisture content of 0.05 to 0.3 % by weight.

The dried granules are then ground in a trapezium mill (from Zenith, China) with air classifier and cyclone filter to a fine powder. This fine powder is then treated in a manufacturing equipment comprising:
a. a mixing vessel of 5,000 L, equipped with a central high speed agitating device containing 2 dispersion blades (toothed discs),
b. side & bottom anchor type low speed scraper.

To the mixing vessel, at the operating temperature of 15 °C, are provided (1) 3,000 L of water, then (2) 0.1 - 1.0% by weight of a carboxymethyl cellulose thickener homogenized with water by using the central agitating device material and then switching on scraper, and (3) adding over a time period of 15 minutes 3,000 kg of the dried and ground granules produced hereinabove. After MAP addition, the mixture is mixed for 30 minutes by using the central agitating device and the scraper.

After this last step the result is a very homogenous medium viscous liquid, containing 50% solids wherein 100% pass through a 150 µm filter. The measured viscosity ranges from 250 cps to 500 cps (Brookfield RVT, 100 rpm)

Laser diffraction particle size analysis was performed using a state of the art particle size analysis equipment. (HELOS/BR combined with a QUIXEL liquid dispersing system).

The resulting curve (particle size distribution and cumulative distribution) is shown in figure 2. The optically detectable particles are thus characterized by a D50 of 25.1 µm, a top cut of about 140 µm, with 1.9% particles with a size not above 1 µm.

Then the determination of dissolved (non optically detectable) particles was performed as in example 1 and provided the following results:
- Fraction of non optically detectable particles constituting an aqueous MAP solution = 25%;
- Fraction of optically detectable particles having a size not above 1 µm : (100 - 75) x 1.9 = 1.42%;
- Fraction of particles having a size above 1 µm = (100 - 25) x (100 - 1.9) = 73.6%, and
- D50 (average size of all particles) = (25.1 µ / 100) x 75% = 18.8 µm.

This shows a distribution of particle sizes completely different from that of example 1.

### EXAMPLE 3

The manufacturing procedure of example 1 is repeated, except that MAP granules (size 2 - 5 mm) are replaced with MAP powder (particle size 20 - 200 µm) and use of the inline rotor/stator mixer is limited to 5 minutes instead of 30 minutes.

This results in an aqueous MAP-containing system with particle size distribution characteristics not significantly different from that of example 1.

## Claims

1. An aqueous system comprising, per 100 parts by weight, from 35% to 80% water and from 20% to 65% mono-ammonium phosphate (MAP), said MAP containing from 40% to 57% by weight phosphorus pentoxide and being present in the form of both optically detectable solid particles and non-optically detectable solid particles, **characterized in that**:
(a) the fraction of optically detectable solid particles having a particle size below 1 µm with respect to all optically detectable solid particles is at least 8%,
(b) no optically detectable solid particles having a particle size above 70 µm are present, and
(c) the average particle size corresponding to 50% of optically detectable solid particles is not above 5 µm.

2. An aqueous MAP-containing system according to claim 1, **characterized in that** no optically detectable solid particles have a particle size above 45 µm are present in the system.

3. An aqueous MAP-containing system according to claim 1 or claim 2, **characterized in that** the fraction of optically detectable solid particles having a particle size below 1 µm is at least 10%.

4. An aqueous MAP-containing system according to any one of claims 1 to 3, **characterized in that** the average particle size corresponding to 50% of optically detectable solid particles is not above 3 µm.

5. An aqueous MAP-containing system according to any one of claims 1 to 4, **characterized in that** non-optically detectable solid particles have a particle size below 0.1 µm.

6. An aqueous MAP-containing system according to any one of claims 1 to 5, **characterized in that** said non-optically detectable solid particles represent more than 50% by weight of the MAP solid particles.

7. An aqueous MAP-containing system according to any one of claims 1 to 6, **characterized in that** the average particle size of both optically detectable and non-optically detectable solid particles is below 1.0 µm.

8. An aqueous MAP-containing system according to any one of claims 1 to 7, **characterized in that** optically detectable solid particles with a particle size above 1.0 µm represent less than 45% by weight of the MAP solid particles.

9. Method for producing an aqueous MAP-containing system according to any one of claims 1 to 8, said method consisting of the steps of:
a. providing a mixing vessel equipped with internal agitating means and optionally with internal wall scraping means, said mixing vessel (i) having an internal high speed rotor/stator mixer and/or being externally connected to a high speed inline rotor/stator mixer,
b. providing to said mixing vessel (1) water, (2) a defoamer, and (3) mono-ammonium phosphate (MAP) containing from 40% to 57% by weight phosphorus pentoxide and being in the form of granules or particles with an average diameter ranging from 50 µm to 5 mm, in such proportions that the resulting water/MAP blend contains, per 100 parts by weight, 20% to 65% MAP and 35% to 80% water;
c. mixing the water/MAP blend in the presence of the defoamer until the MAP granules or particles provided in step (b) are disintegrated into both optically detectable solid particles and non-optically detectable solid particles as defined in claim 1; and
d. adding a thickener to set the viscosity of the aqueous MAP-containing system between 100 cps and 200 cps.

10. A method according to claim 9, wherein said MAP granules or particles provided in step (b) have a moisture content from 1% to 5% by weight.

11. A method according to claim 9 or claim 10, wherein the thickener is a clay type thickener.

12. A method according to any one of claims 9 to 11, wherein the amount of thickener is from 0.2% to 1% by weight of the water/MAP blend.

13. Use of the aqueous MAP-containing system according to any one of claims 1 to 8 as a flame retardant additive for manufacturing a flame-retardant product such as a flame-retardant wood panel or a flame-retardant MDF panel.

14. Method for producing a flame-retardant product, consisting of the steps of:
a. providing an aqueous MAP-containing system according to any one of claims 1 to 8,
b. applying, impregnating, injecting or coating a product with the aqueous MAP-containing system of step (a), and
c. drying the impregnated, injected or coated product of step (b) until at least 80% of water from the aqueous MAP-containing system has been removed.

15. A method for producing a flame-retardant product according to claim 14, wherein said flame-retardant product is:
- a flame-retardant wood panel, a MDF panel, or an oriented strand board panel, or
- a flame-retardant engineered wood product wherein wood fibers are combined with a resin binder, and wherein step (b) is performed prior to, or simultaneously with, combining wood fibers with the resin binder.
